# EUROPÄISCHE PATENTANMELDUNG

(11) **EP 1 669 233 A1**
(43) Veröffentlichungstag der Anmeldung: **14.06.2006**
(21) Anmeldenummer: 04028941.5
(22) Anmeldetag: 07.12.2004
(51) Int. Cl.: B60J 7/047

(54) **Dachsystem für ein Fahrzeug mit verschiebbaren Deckeln**

(71) Anmelder: ArvinMeritor GmbH, 63128 Dietzenbach (DE)
(72) Erfinder: Grimm, Rainer, 60299 Frankfurt (DE); Becher, Thomas, 63110 Rodgau (DE); Böhm, Horst, 60599 Frankfurt (DE); Bachmann, Hubert, 67125 Dannstadt (DE)
(74) Vertreter: Kitzhofer, Thomas

(57) **Zusammenfassung**

Die Erfindung betrifft ein Dachsystem, insbesondere ein Dachmodul (10), für ein Fahrzeug, mit zwei verschiebbaren Deckeln (12, 14) zum wahlweisen Freilegen von Dachöffnungsabschnitten. Das Dachmodul (10) ist dabei so ausgebildet, daß die Deckel (12, 14) durch Verschieben ihre Positionen vertauschen können. Dies ist insbesondere dann von Vorteil, wenn die beiden Deckel (12, 14) unterschiedliche Eigenschaften bezüglich der Lichtdurchlässigkeit besitzen.

## Beschreibung

Die vorliegende Erfindung betrifft ein Dachsystem, insbesondere Dachmodul, für ein Fahrzeug, mit zwei verschiebbaren Deckeln zum wahlweisen Freilegen von Dachöffnungsabschnitten.

Aus dem Stand der Technik sind Dachsysteme mit als Schiebedach ausgebildeten Dachmodulen bekannt, bei denen ein oder mehrere Deckel so bewegt werden kann, daß er bzw. sie unter oder über die Dachaußenhaut verfahren wird und so einen Dachöffnungsabschnitt freilegt. Der Deckel kann dabei transparent sein oder auch lichtundurchlässig. Zusätzlich kann eine Blende vorgesehen sein, um im Falle eines transparenten Deckels den Lichteinfall in den Fahrgastinnenraum zu begrenzen oder zu verhindern. Eine solche Blende ist meist manuell verschiebbar und befindet sich im geschlossenen Zustand unter dem Deckel.

Die Erfindung hingegen schafft ein Dachsystem, insbesondere ein Dachmodul, für ein Fahrzeug, mit zwei verschiebbaren Deckeln, wobei das Dachmodul so ausgebildet ist, daß die Deckel durch Verschieben ihre Positionen vertauschen können. Ein solches Dachsystem ermöglicht es, daß die beiden Deckel nach dem Wunsch des Fahrers plaziert werden können. Die Deckel können in Fahrzeuglängsrichtung gesehen nebeneinander, also rechts und links, oder hintereinander, also vorne und hinten, angeordnet sein.

Ein Deckel kann über oder unter den anderen Deckel verschoben werden, wodurch der verschobene Deckel einen Dachöffnungsabschnitt freilegt. Sind die beiden Deckel in Fahrzeugslängsrichtung beispielsweise hintereinander angeordnet, so kann das Dach entweder vorne oder hinten geöffnet werden. Dabei ist vorgesehen, daß ein Deckel nicht zwangsläufig den entsprechenden Dachöffnungsabschnitt komplett schließt oder komplett freilegt, sondern es ist auch möglich, daß ein Deckel nur abschnittsweise unter oder über den anderen Deckel verschoben wird. Somit kann das Dach vorne oder hinten lediglich teilweise geöffnet werden. Deshalb besteht auch die Option, daß das Dachsystem ein gleichzeitiges Öffnen des Fahrzeugdachs vorne und hinten ermöglicht, wobei die beiden Dachöffnungsabschnitte in diesem Fall nicht komplett freigelegt werden.

Es ist vorzugsweise vorgesehen, daß die Deckel mit einem motorischen Antrieb verschoben werden. Dies erhöht den Komfort, da der Fahrer oder Beifahrer die Deckel nicht manuell verschieben muß. Dabei kann je ein Elektromotor pro Deckel vorgesehen sein oder auch ein Elektromotor für beide Deckel. Jedoch besteht auch die Möglichkeit, eine manuelle Betätigung der Deckel vorzusehen.

Ein Vertauschen der Positionen der Deckel ist insbesondere dann sinnvoll, wenn die beiden Deckel unterschiedliche Eigenschaften bezüglich der Lichtdurchlässigkeit besitzen. Beispielsweise kann einer der Deckel gar nicht oder nur leicht lichtdurchlässig sein, wobei der andere Deckel eine erhöhte Lichtdurchlässigkeit besitzt. Wünscht der Fahrer insbesondere bei starkem Sonnenschein eine vollständige oder fast vollständige Abschottung vom Sonnenlicht von oben, so kann er den entsprechend weniger lichtdurchlässigen Deckel an die Position über den Fahrersitz verschieben. Der lichtdurchlässigere Deckel wird dann in Richtung des Fahrzeugsfonds, beispielsweise an eine Stelle über den Rücksitzen, verschoben. Im Bedarfsfall können die Positionen auch wieder vertauscht werden.

Für einen besseren optischen Gesamteindruck und einen verbesserten Luftwiderstandsbeiwert ist es vorteilhaft, wenn die Deckel bei geschlossenem Dachmodul in der gleichen Ebene liegen. Das Dachsystem hat dann keine wesentlichen Stufen. Da Dächer üblicherweise gekrümmt sind, liegt der vordere Deckel etwas tiefer als der hintere, jedoch ist insgesamt eine glatte Dachhaut vorhanden.

Für einen vereinfachten konstruktiven Aufbau ist es denkbar, daß die Deckel bei geschlossenem Dachmodul gegeneinander höhenversetzt sind. So kann der erste Deckel in der Dachebene liegen und der zweite Deckel entsprechend seiner Dicke unter oder über dem ersten und dem Rest des Dachmoduls. Beim Vertauschen der Deckel müssen diese keine Bewegungen in vertikaler Richtung ausführen, sie müssen lediglich in Horizontalrichtung verschoben werden.

Vorteilhafterweise liegen die Deckel im geschlossenen Zustand hintereinander und stoßen aneinander an. In diesem Fall ist kein zusätzlicher Steg zwischen den Deckeln notwendig, welcher zusätzliche Dichtungen notwendig machen würde und ein Verschieben der Deckel gegeneinander behindern könnte. Eine Anordnung hintereinander hat den Vorteil, daß insbesondere bei einer unterschiedlichen Transparenz der beiden Deckel ein Verschieben derselben zwischen dem vorderen und dem hinteren Teil des Dachsystems, also einer Position über dem Fahrer-/Beifahrersitz und den Rücksitzen erfolgen kann. Da meistens der Fond des Fahrzeugs nicht besetzt ist, kann ein Vertauschen der Deckel rein nach den Wünschen des Fahrers und des Beifahrers erfolgen.

Vorteilhafterweise ist vorgesehen, daß mindestens einer der Deckel aus Kunststoff besteht. Dies führt zur Gewichtseinsparung und trägt diesem heutzutage wichtigen Kriterium im Fahrzeugbau Rechnung. Deshalb ist auch vorgesehen, beide Deckel aus Kunststoff zu fertigen.

Die Deckel können auch so ausgebildet sein, daß sie komplett transparent sind, also aus Glas oder einem entsprechend durchsichtigen Kunststoff bestehen. Es kann aber auch vorgesehen sein, daß mindestens einer der Deckel zwar lichtdurchlässig, aber nicht durchsichtig ist. Dies betrifft den Fall eines milchigen Glases oder Kunststoffs.

Natürlich könnte auch ein lichtundurchlässiger, mit Solarzellen bestückter Deckel verwendet werden.

Weitere Merkmale und Vorteile der Erfindung ergeben sich aus der nachfolgenden Beschreibung zweier Ausführungsformen und aus den beigefügten Zeichnungen, auf die Bezug genommen wird. Es zeigt:
Fig. 1 schematisch eine erste Ausführungsform eines Dachsystems von oben mit zwei Deckeln;
Fig. 2 schematisch ein Dachsystem von oben mit zwei Deckeln, bei dem die Deckel vertauscht sind;
Fig. 3 schematisch ein Dachsystem gemäß Fig. 2 von der Seite;
Fig. 4 schematisch ein Dachsystem mit freigelegtem Dachöffnungsabschnitt von oben.
Fig. 5 schematisch ein Dachsystem mit freigelegtem Dachöffnungsabschnitt von der Seite;
Fig. 6 schematisch ein Dachsystem mit freigelegtem Dachöffnungsabschnitt von der Seite; und
Fig. 7 schematisch ein Dachsystem in einer zweiten Ausführungsform, mit zwei höhenversetzten Deckeln von der Seite.

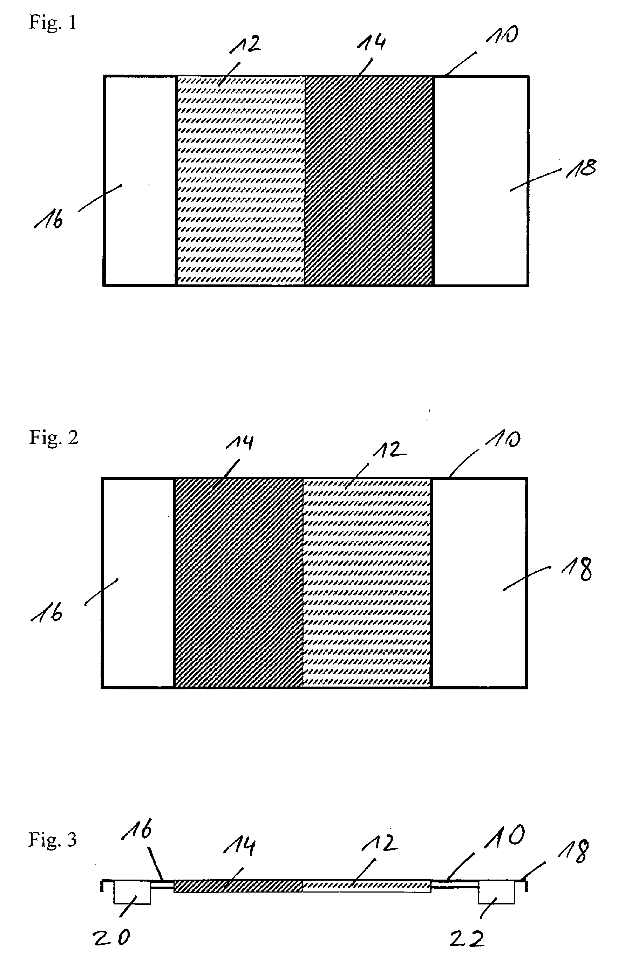

Fig. 1 zeigt ein Dachsystem, insbesondere ein Dachmodul 10, für ein Fahrzeug, mit einem verschiebbaren ersten Deckel 12 und einem verschiebbaren zweiten Deckel 14. In dieser ersten Ausführungsform ist der Deckel 12 transparent und der Deckel 14 lichtundurchlässig. Es ist außerdem ein vorderer Abschnitt 16 und ein hinterer Abschnitt 18 des Dachmoduls erkennbar, wobei der vordere Abschnitt 16 an die Frontscheibe eines Fahrzeugs angrenzt und der hintere Abschnitt 18 an die Heckscheibe.

Fig. 2 stellt das Dachmodul 10 aus Fig. 1 dar, wobei die Deckel 12 und 14 gegeneinander vertauscht sind. Das Vertauschen geschieht vorzugsweise automatisch, sobald eine Person im Fahrzeug dies durch Betätigung einer entsprechenden Vorrichtung veranlaßt. Es ist erkennbar, daß der Deckel 12 die ursprüngliche Position des Deckels 14 und der Deckel 14 die ursprüngliche Position des Deckels 12 eingenommen hat. Der transparente Deckel 12 ist damit über dem Fond des Fahrzeugs angeordnet. Durch die Lichtundurchlässigkeit des Deckels 14 wird der Fahrer bei dieser Anordnung vor einer direkten Sonnenbestrahlung geschützt.

In Fig. 3 ist die Anordnung der Deckel nach Fig. 2 von der Seite dargestellt. Hier sind schematisch zwei Antriebsmittel erkennbar, wobei das eine aus einem Elektromotor 20 für den Deckel 14 und das andere aus einem Elektromotor 22 für den Deckel 12 besteht. Durch die unabhängigen Elektromotoren 20, 22 ist ein individuelles Verfahren jedes einzelnen Deckels 12, 14 möglich. Die Deckel 12, 14 grenzen in Fahrtrichtung unmittelbar aneinander an und gehen ohne Absatz auf der Außenhaut ineinander über, d.h. sie liegen im wesentlichen in einer Ebene. Der Antrieb der Deckel 12, 14 kann auf herkömmliche, im Stand der Technik beschriebene Weise mit Elektromotor und drucksteif geführten Antriebskabeln, gegebenenfalls auch noch verbunden mit Kulissenführungen oder, allgemeiner, mit Führungsmitteln erfolgen.

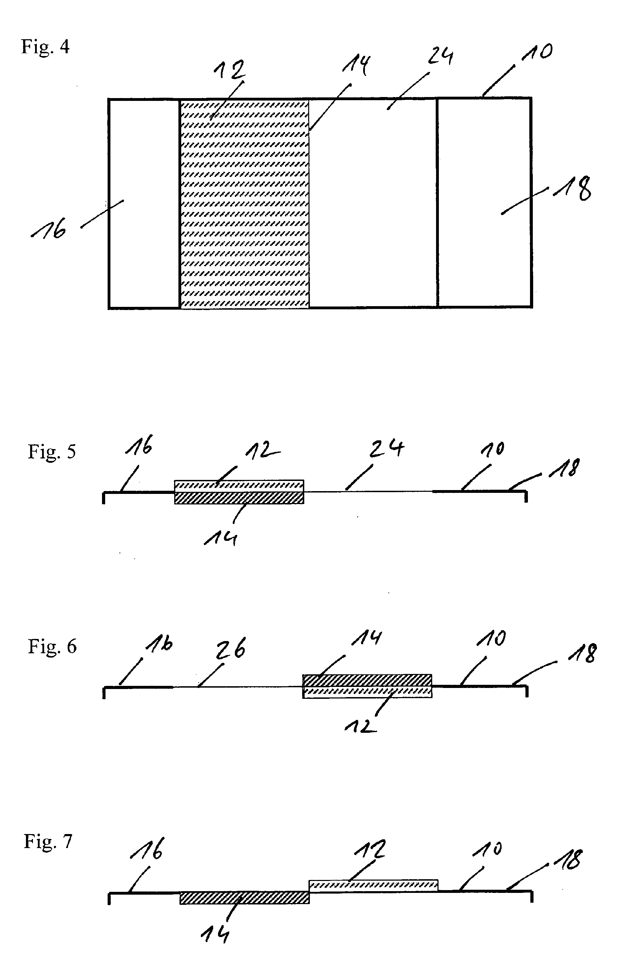

Fig. 4 zeigt entsprechend, daß der Deckel 12 so verfahren wurde, daß er über dem Deckel 14 angeordnet ist. Dies führt dazu, daß ein hinterer Dachöffnungsabschnitt 24 freigelegt wird, so daß an dieser Stelle Luft in den Fahrzeuginnenraum gelangen kann.

Fig. 5 zeigt die Anordnung der beiden Deckel 12, 14 gemäß Fig. 4 von der Seite. Es ist erkennbar, daß der Deckel 12 über dem Deckel 14 liegt. Die Oberseite des Deckels 14 schließt mit der Oberfläche des vorderen Abschnitts 16 des Dachmoduls ab, wobei der Deckel 12 komplett in einer Ebene über dem Abschnitt 16 liegt. Gegebenenfalls kann auch vorgesehen sein, daß beide Deckel 12, 14 tiefer angeordnet sind, so daß die Oberseite des Deckels 12 mit der Oberfläche des Abschnitts 16 eine Ebene bildet.

Fig. 6 zeigt den umgekehrten Fall von Fig. 4, wobei der Deckel 14 nach hinten über den Deckel 12 verschoben wurde. Dadurch wird ein vorderer Dachöffnungsabschnitt 26 freigelegt. Um ausgehend von der Anordnung aus Fig. 5 auf die Anordnung gemäß Fig. 6 zu gelangen, wird zuerst der Deckel 12 in die Position des hinteren Dachöffnungsabschnitts 24 verschoben, so daß eine Anordnung wie in Fig. 3 erreicht wird. Anschließend wird der Deckel 14 ebenfalls in den hinteren Dachöffnungsabschnitt 24 verfahren, so daß er über dem Deckel 12 liegt. Dazu werden die verschobenen Deckel 12, 14 also auch in ihrer vertikalen Lage an die neuen Positionen angepaßt, was beim Vergleich von Fig. 5 und Fig. 6 klar wird.

Um beim Verschieben eine Bewegung in vertikaler Richtung zu Beginn der Verschiebebewegung zu vermeiden, ist in Fig. 7 vorgesehen, die beiden Deckel 12 und 14 so zu plazieren, daß sie in geschlossener Stellung des Dachmoduls 10 gegeneinander in vertikaler Richtung versetzt sind. Beim Verschieben ist deshalb keine vertikale Bewegung mehr nötig, sondern lediglich eine horizontale Bewegung. Der Deckel 14 ist dann in jeder Anordnung unter dem Deckel 12 angeordnet.

### Bezugszeichenliste

- 10: Dachmodul
- 12: erster Deckel
- 14: zweiter Deckel
- 16: vorderer Abschnitt
- 18: hinterer Abschnitt
- 20: Elektromotor
- 22: Elektromotor
- 24: hinterer Dachöffnungsabschnitt
- 26: vorderer Dachöffnungsabschnitt

## Patentansprüche

1. Dachsystem, insbesondere Dachmodul (10), für ein Fahrzeug, mit zwei verschiebbaren Deckeln (12, 14) zum wahlweisen Freilegen von Dachöffnungsabschnitten (24, 26), wobei das Dachmodul (10) so ausgebildet ist, daß die Deckel (12, 14) durch Verschieben ihre Positionen vertauschen können.

2. Dachsystem nach Anspruch 1, **dadurch gekennzeichnet, daß** ein Deckel (12) über oder unter den anderen Deckel (14) verschoben werden kann, wodurch der verschobene Deckel (12) einen Dachöffnungsabschnitt (24, 26) freilegt.

3. Dachsystem nach Anspruch 1 oder 2, **dadurch gekennzeichnet, daß** die Deckel (12, 14) mit einem motorischen Antrieb (20, 22) verschoben werden.

4. Dachsystem nach einem der Ansprüche 1 bis 3, **dadurch gekennzeichnet, daß** die beiden Deckel (12, 14) unterschiedliche Eigenschaften bezüglich ihrer Lichtdurchlässigkeit besitzen.

5. Dachsystem nach einem der Ansprüche 1 bis 4, **dadurch gekennzeichnet; daß** die Deckel (12, 14) bei geschlossenem Dachmodul (10) im wesentlichen in der gleichen Ebene liegen.

6. Dachsystem nach einem der Ansprüche 1 bis 4, **dadurch gekennzeichnet, daß** die Deckel (12, 14) bei geschlossenem Dachmodul (10) gegeneinander höhenversetzt sind.

7. Dachsystem nach einem der Ansprüche 1 bis 6, **dadurch gekennzeichnet, daß** die Deckel (12, 14) im geschlossenen Zustand hintereinander liegen und aneinander anstoßen.

8. Dachsystem nach einem der Ansprüche 1 bis 7, **dadurch gekennzeichnet, daß** mindestens einer der Deckel (12, 14) aus Kunststoff besteht.

9. Dachsystem nach einem der Ansprüche 1 bis 8, **dadurch gekennzeichnet, daß** einer der Deckel (12, 14) transparent ist.
